# EUROPEAN PATENT APPLICATION

(11) **EP 1 149 845 A2**
(43) Date of publication of application: **31.10.2001**
(21) Application number: 01110036.9
(22) Date of filing: 26.04.2001
(51) Int. Cl.: C08B 30/14, C08B 31/04, A23L 2/62, A23L 1/035

(54) **Substantially sediment-free beverage emulsion stabilizer**

(30) Priority: 28.04.2000 US 200576 P; 19.03.2001 US 812127
(71) Applicant: Trubiano, Paolo C., Sommerville, New Jersey 08876 (US); Tsubomoto, Hozumi, Hyogo 665-0034 (JP); Otera, Takaaki, Osaka 662-0862 (JP)
(72) Inventor: Trubiano, Paolo C., Sommerville, New Jersey 08876 (US); Tsubomoto, Hozumi, Hyogo 665-0034 (JP); Otera, Takaaki, Osaka 662-0862 (JP)
(74) Representative: Held, Stephan, Dr.rer.nat., Dipl.-Chem.

(57) **Abstract**

This invention relates to a modified starch that is useful in a shelf stable emulsion and provides a stable, substantially sediment-free beverage. The invention also relates to a process for preparing a modified starch which is characterized by low turbidity in aqueous solutions, and to the preparation of chemical compositions and food products, including beverages containing the modified starch.

## Description

This invention claims priority of provisional U.S. Ser. No. 60/200,576, filed April 28, 2000 and U.S. Ser. No. 09/812,127 filed March 19, 2001.

This invention relates to a modified starch that is useful in a shelf stable emulsion and provides a stable, substantially sediment-free beverage. The invention also relates to a process for preparing a modified starch which is characterized by low turbidity in aqueous solutions, and to the preparation of chemical compositions and food products, including beverages containing the modified starch.

A variety of chemical compositions are used as emulsifying agents in food, cosmetics, paint, pharmaceutical and polymer industries, as well as in textile and leather processing, ore flotation, oil drilling and agricultural spraying operations. In many of these applications, the emulsifying agent also functions as a stabilizer of the viscosity or fluidity of the continuous phase. Frequently, these applications require that the emulsion be shelf stable for long periods of time.

Typical compositions which function as water soluble emulsifiers and stabilizers include gums, such as gum arabic, and guar, starches, proteins, and various water soluble polymers. See e.g., Encyclopedia of Chemical Technology, Kirk-Othmer Editor, 3rd Edition, Wiley-lnterscience, New York, N.Y., 1979, Vol.8, pp. 900-910, 918, 923-925; Vol. 12, pp. 55-6. Gum arabic is preferred in many applications for its shelf stability.

Gum arabic is a branched, substituted heteropolysaccharide characterized by extreme water solubility, low viscosity, and the absence of odor, color or flavor. Gum arabic has been used as an emulsifier and stabilizer in foods such as confections, syrups, flavor oil emulsions, ice cream and beverages, and in inks, adhesives, textiles and lithography solutions.

Gum arabic is a naturally occurring gum which is grown in the Middle East and Africa. Because gum arabic is obtained from these areas, it is expensive, moreover, its supply and quality are unpredictable. Accordingly, industry has long searched for a shelf stable, dependable, low cost replacement for gum arabic. Starch-derived products have been suggested for such use.

For example, U.S. Pat. No. 2,661,349 issued Dec. 1, 1953 to Caldwell et al. discloses substituted dicarboxylic acid anhydride starch half ester derivatives. Certain of these derivatives form stable oil-in-water emulsions suitable for use in beverage emulsion, flavor emulsion, and other emulsion applications. Additionally, cold water soluble, low viscosity octenylsuccinate starch derivatives have been successfully used to replace gum arabic in carbonated beverages. Higher viscosity octenylsuccinate derivatives have been useful as gum arabic replacers in salad dressings. See e.g., P. Trubiano, Chapter 9, in Modified Starches: Properties and Uses, CRC Press, Boca Raton, Fla., 1986, p. 134-47.

The low viscosity (converted) starches which are used in beverage and flavor emulsions are ordinarily prepared by acid degradation of the base starch. Processes for producing low viscosity starches are well-known. U.S. Pat. No. 4,035,235 issued Jul. 12, 1977 to Richards et al. discloses a method for degradation of lipophilic substituted starches which uses alpha-amylase digestion as an alternative to acid degradation for preparing low viscosity starches. The lipophilic substituted starches are suitable for flavor encapsulation and oil-in-water emulsions. These conversion methods produce starch products which are suitable as emulsifiers for oils used in beverages.

One drawback to the use of known starch-derived products in replacing gum arabic is that known starch derivatives are less stable during storage. These starch derivatives display shorter shelf-life and stability than gum arabic. Therefore, in certain applications, such as flavored syrup bases used in the manufacture of soft drinks and similar types of beverages, these starch derived substitutes do not perform as well as gum arabic. Because beverage manufacturers ship flavored syrup bases to bottlers in diverse locations where the syrup bases may be held in storage for long periods of time prior to use in the bottling operation, the flavor oil emulsion must remain stable during storage.

The stability problem in beverage applications is thought to occur because of the tendency of starch products to retrograde, causing the flavor oil emulsion to break down upon long term storage. In severe cases, the starch may retrograde to form a gel and the flavor oil may separate entirely from the water phase. Retrogradation of starches is essentially a crystallization process that occurs when linear portions of the starch molecules align themselves next to each other and form interchain hydrogen bonds through the hydroxyl groups. When sufficient interchain bonding occurs, the molecules associate to form molecular aggregates which display a reduced capacity for hydration and, therefore, lower water solubility. These aggregates may precipitate, or, in more concentrated solutions, may form a gel. The tendency to retrograde is more pronounced in starches containing high levels of the linear amylose molecule. In starches containing both linear (amylose) and branched (amylopectin), or only branched molecules, the tendency to retrograde is less pronounced. As the temperature is lowered, both amylose and amylopectin containing starches display a greater tendency to retrograde.

Retrogradation has been partially overcome in certain applications by chemically derivatizing the starch molecule to stabilize the starch by interfering with the association between starch molecules, or portions of the same molecule, and thereby reducing the tendency of the starch to lose its hydration ability on storage. For example, reacting the starch with a reagent to introduce substituents such as hydroxypropyl, phosphate, acetate or succinate groups tends to stabilize the starch molecule during storage. These derivatization reactions may be carried out on starches which are further modified by crosslinking or degradation to obtain starches for particular applications. However, these derivatized starches do not provide the stable emulsification properties which are typical of gum arabic.

Other processes known to limit starch retrogradation at low temperatures also do not provide stable emulsifying starches. For example, U.S. Pat. No. 3,525,672 issued Aug. 25, 1970 to Wurzburg et al., discloses treating a crosslinked, inhibited starch thickener with an enzyme such as beta-amylase to impart freeze/thaw stability to starch thickeners for pie fillings, puddings and other thickened foods which are subjected to low temperature storage. It is stated that in addition to the described inhibition procedure, it is sometimes advantageous to partially derivatize the starch bases. Typical substituent groups include ester groups such as acetate, succinate, phosphate and sulfate groups as well as ether groups.

U.S. Pat. No. 4,428,972 issued Jan. 31, 1984 to Wurzburg et al., discloses a waxy starch thickener with superior low temperature stability in aqueous dispersions, wherein the starch is obtained from a selected plant of a wxsu₂ genotype.

U.S. Pat No. 5,185,176 issued Feb. 9, 1993 to Chiu et al. discloses a modified starch product useful as a stable emulsifier in storage, refrigeration and freeze/thaw applications which can replace gum arabic. However, in certain low temperature beverages these emulsifiers do not produce a beverage having an especially low degree of sediment.

Thus, there remains a need for an emulsifier for use in beverages which is substantially sediment-free at low temperature.

Accordingly, it is the object of the present invention to provide an improved starch for use as an emulsifier that is particularly useful in producing beverages which are substantially sediment free at low temperature as well as a method for producing such an improved starch.

It is a further object to provide products containing starch based emulsions having good shelf stability, particularly beverages containing flavor oil emulsions.

This invention relates to a modified starch that is useful in a shelf stable emulsion and provides a stable, substantially sediment-free beverage. The invention also relates to a process for preparing a modified starch which is characterized by low turbidity in aqueous solutions, and to the preparation of chemical compositions and food products, including beverages containing the modified starch.

The process for preparing the emulsifying starch of the present invention comprises modifying the base starch by derivatization and exo-enzyme degradation in any order. The starch may be optionally bleached, converted, or gelatinized at any stage before or during the modification. An aqueous solution of the modified starch is then filtered to obtain a solution having a turbidity of less than about 80 Nephelometer Turbidity Units ("NTUs"), particularly less than about 25, according to the test described herein in Example III, *infra.*

The starch of this invention, having reduced levels of turbidity, is useful as an emulsifier, particularly in beverages containing flavoring oils, and can provide such beverages having sedimentation levels of less than about 2, particularly less than about 1, according to the test described in the Sedimentation Evaluation test, *infra*. Further, this invention provides the improved food products, particularly low-sediment beverages and flavoring concentrates, having good shelf stability, comprising the emulsifying starch of the present invention.

This invention relates to a modified starch that is useful in a shelf stable emulsion and as a replacement for gum arabic in systems requiring a stable, substantially sediment-free oil-in-water emulsion, especially in beverages that are flavored with flavoring oils. The invention also relates to a process for preparing the modified starch which is characterized by low turbidity in aqueous solutions, and to the preparation of chemical compositions and food products, including beverages containing the modified starch.

All starches and flours (hereinafter "starch") may be suitable for use as base materials herein and may be derived from any native source. A native starch as used herein, is one as it is found in nature. Also suitable are starches derived from a plant obtained by standard breeding techniques including crossbreeding, translocation, inversion, transformation or any other method of gene or chromosome engineering to include variations thereof. In addition, starch derived from a plant grown from artificial mutations and variations of the above generic composition, which may be produced by known standard methods of mutation breeding, are also suitable herein.

Typical sources for the base starches are cereals, tubers, roots, legumes and fruits. The native source can be corn, potato, sweet potato, banana, barley, wheat rice, sago, amaranth, tapioca, arrowroot, canna, and sorghum, including the waxy or high amylose varieties thereof. As used herein, the term "waxy" is intended to include a starch containing at least about 95% by weight amylopectin and the term "high amylose" is intended to include a starch containing at least about 40% by weight amylose.

Also included as useful base starches are the conversion products derived from any of the starches, including fluidity or thin-boiling starches prepared by oxidation, enzyme conversion (including alpha amylase), acid hydrolysis, heat and/or acid dextrinization, thermal and or sheared products.

Also suitable as base materials are gelatinized or pregelatinized starches, derived from any of the starches, including the converted starches, which are known in the art and disclosed in U.S. Pat. Nos. 4,465,702, 5,037,929, 5,131,953, and 5,149,799. Conventional procedures for pregelatinizing starch are also known to those skilled in the art and described, for example, in Chapter XXII - "Production and Use of Pregelatinized Starch", Starch: Chemistry and Technology. Vol. III - Industrial Aspects, R.L. Whistler and E.F. Paschall, Editors, Academic Press, New York, 1967.

The process for preparing the emulsifying starch of the present invention comprises modifying the base starch by derivatization and exo-enzyme degradation in any order. The starch may be optionally bleached, converted, or gelatinized at any stage before or during the modification. An aqueous solution of the modified starch is then filtered to obtain a solution having a turbidity of less than 80 NTUs.

Where the base starch is to be converted, the conversion is typically carried out before modifying the converted starch (via derivatization and exo-enzyme degradation). Particularly useful methods of conversion include mild hydrolysis, heat dextrinization and alpha-amylase hydrolysis. Conversion may optionally also be conducted during modification, particularly after derivatization and before the exo-enzyme degradation. Conversion with alpha-amylase is typically carried out before the exo-enzyme treatment, as described herein, *infra.* Generally, when a high viscosity emulsification system is desired, it is not necessary to convert the base starch.

The starch base may optionally be bleached using methods known in the art before or during the modification (i.e. after derivatization and before exo-enzyme degradation) of the starch. Chlorine bleaching is particularly useful, especially in a concentration of 8200 ppm before modification of the starch. When using chlorine bleach, after attaining the desired color, the bleach is neutralized with bisulfite and the bleached starch is subsequently derivatized.

Additionally, the starch base may optionally be gelatinized before or during modification and is particularly useful if done after derivatizing and before degrading the starch. The gelatinization process unfolds the starch molecules from the granular structure, thereby permitting the exo-enzyme to more easily and uniformly degrade the outer branches of the starch molecules.

The starch base which is optionally converted, bleached or gelatinized may be derivatized and exo-enzyme degraded in any order. Derivatization may be achieved by treatment with any reagent which can contribute emulsification properties to the starch. In particular, the reagent must contain a hydrophobic moiety and may contain a hydrophilic moiety. Particularly useful hydrophobic moieties are alkyl, alkenyl, aralkyl or aralkenyl groups containing at least about five carbon atoms, and preferably from about five to about twenty-four carbon atoms. As in the preferred embodiment set forth below, the hydrophilic moiety may be contributed by the reagent, or, as in other embodiments, the starch's own hydroxyl groups serve as the hydrophilic moiety and the reagent only contributes a hydrophobic moiety.

In a preferred embodiment, the starch is derivatized by reaction with an alkenyl cyclic dicarboxylic acid anhydride by the method taught in U.S. Pat. No. 2,661,349. However, any process for derivatizing starch which yields the desired blend of hydrophobic and hydrophilic functions on the starch molecule, and thereby providing stable emulsification properties, may be used to prepare the modified starch claimed herein. This includes processes not now known in the art.

Where a low viscosity emulsifier is desirable, the preferred embodiment is an octenylsuccinate half ester derivative of an amylopectin containing starch, such as waxy maize, which has been converted to a Water Fluidity (WF) of up to about 60. Water Fluidity is an empirical test of viscosity measured on a scale of 0-90 wherein fluidity is the reciprocal of viscosity. Water Fluidity of starches is typically measured using a Thomas Rotational Shear-Type Viscometer (manufactured by Arthur H. Thomas Co., Philadelphia, Pa. 19106), standardized at 30° C with a standard oil having a viscosity of 24.73 cps., which oil requires 23.12.+-.0.05 sec. for 100 revolutions. Accurate and reproducible measurements of the Water Fluidity are obtained by determining the time which elapses for 100 revolutions at different solids levels depending on the starch's degree of conversion (as conversion increases, the viscosity decreases). In a preferred embodiment, the converted starch is treated with at least 0.25%, and preferably 3.0% of the octenylsuccinic acid anhydride. If desired, a hydroxypropyl octenylsuccinate derivative may be used.

For other products, any degree of substitution or level of conversion that results in the desired viscosity and emulsification characteristics may be employed. For example, U.S. Pat. No. 4,035,235 discloses a suitable embodiment, comprising a method for producing a lipophilic derivative of starch to be used as an alternative to gum arabic in encapsulating water insoluble substances, such as volatile flavoring oils and perfumes.

According to the preferred embodiment, gelatinization occurs after preparing the starch derivative. Gelatinization may be achieved by methods known in the art, including, for example, batch cooking. See e.g.Thomas D.J.and Atwell, W.A., Starches, Chapter 3, pg 25- 27, Eagen Press, St. Paul, MN (1999). Optionally, the gelatinized derivatized starch may then be hydrolyzed ("converted") with α-amylase, mild acid hydrolysis and/or heat dextrinization methods that are well-known in the art. See e.g., M. W. Rutenberg, "Starch and its Modifications", pg 22-36,, in Handbook of Water-Soluble Gums and Resins, R.L. Davidson, editor, McGraw Hill, Inc., New York, N.Y. (1980). After a slurry of the derivatized starch has been gelatinized, the solids, temperature and pH of the slurry are adjusted to provide optimum enzyme activity. It is particularly preferred to use 400 ppm of the α-amylase enzyme in a solution of the derivatized starch having a solids content of about 20 Brix at about 30 °C until a viscosity of between about 60 to about 100 cps is achieved. The α-amylase enzyme may then be inactivated by raising the temperature of the solution to about 95 °C and lowering pH to about 4.5.

The partially degraded derivatized starch is then treated with an exo-enzyme. The optimum parameters for enzyme activity will vary depending upon the enzyme used. Thus, the rate of enzyme degradation depends on factors including the type of enzyme used, enzyme concentration, substrate concentration, pH, temperature, the presence or absence of inhibitors and other factors. Depending on the type of enzyme, or its source, various parameters may require adjustment to achieve optimum digestion rate. In general, the preferred enzyme digestion reaction is carried out at the highest solids content that is feasible to facilitate subsequent drying of the starch composition while maintaining optimum reaction rates. For example, for the barley beta-amylase used herein to produce an emulsifier for beverage applications, a precooked starch dispersion at a solids content ranging up to 33% is preferred. Higher solids may be used, however, at higher solids agitation is difficult or ineffective and the starch dispersion is more difficult to handle. Particularly preferred is the use of 400 ppm of the beta-amylase having a solids content of 20 Brix at 30 °C, thereby providing an optimum viscosity level of 25-30 cps.

Although the process of this invention is illustrated employing beta-amylase as the enzyme component, other enzymes, such as exo-alpha-1,4-glucosidase, exo-1,4-alpha-D-glucan maltotetrahydrolase, exo 1,4-alpha-D-glucan maltohexahydrolase, or any other exo-enzyme which exhibits selectivity in cleaving the 1,4-linkages of the starch molecule from the non-reducing ends, but leaving the 1,6-linkages intact, may be used to prepare the modified starch herein.

Because such exo-enzymes remove glucose, maltose, or larger saccharide units only from the outer branches of the amylopectin molecule, and do not debranch the molecule, the enzymatic degradation process yields molecules in which the short chain branch points remain intact. In amylopectin, branch points occur at approximately four to five percent of the monosaccharide units of the molecule. Following enzymatic degradation of amylopectin, the outer branches of the molecule are shortened to the point where association with other branches is reduced or eliminated, and the remaining 1,6 branch points prevent the inner branches from associating. Therefore, degraded molecules show improved resistance to retrogradation during storage and during freeze/thaw cycles. It is for this reason that an exo-enzyme capable of cleaving the 1,4, but not the 1,6, linkages from the non-reducing ends of the starch molecule is a necessary element of the invention herein.

Although the process of this invention makes use of an enzyme in solution, processes utilizing an enzyme immobilized on a solid support are intended to fall within the scope of this invention.

Optimum concentrations of enzyme and substrate are governed by the level of enzyme activity. Enzyme activity may be expressed in Degrees of Diastatic Power (DP°) per ml of aqueous enzyme solution. The DP° is the amount of enzyme, contained in 0.1 ml of a 5% solution of the sample enzyme preparation, that will produce sufficient reducing sugars to reduce 5 ml of Fehling's solution when the sample is incubated with 100 ml of substrate for one hour at 20° C. The procedure for determining DP° is published in the Food Chemicals Codex, Third Edition, National Academy Press, Washington, D.C., 1981, p. 484.

A DP° in excess of 334 per 100 g of starch on a dry weight basis is needed to degrade gelatinized starch solutions containing up to 33% solids within 8 hours under optimum conditions of temperature and pH. A DP° of 840-1,110 per 100 g of starch on a dry weight basis (at a pH of 5.3 and temperature of 57° C) is preferred.

The reaction may proceed in the presence of buffers to ensure that the pH will be at the optimum level throughout the degradation. Buffers such as acetates, citrates, or the salts of other weak acids are acceptable. Other agents may be used to optimize enzyme activity. The reaction may be carried out in a pH range from about 3-10, with the preferred range being between 5 and 7, and the optimum being 5.7 at 55-60°C.

The aqueous starch dispersion should be held during the enzymatic digestion at a temperature of about 20-100°C, the preferred range being 55-60°C and the optimum being 57°C However, if shorter reaction times are desired, a temperature range from 60-63°C or a higher enzyme concentration may be used. As with other parameters of the enzyme reaction, the preferred and optimum temperature ranges will vary with changes in other parameters such as substrate concentration, pH and other factors affecting enzyme activity, and can be determined by the practitioner.

The enzyme reaction is permitted to continue until the desired level of degradation is reached or until substantially all of the available maltose has been removed from the starch molecule. The progress of enzyme reaction may be measured by various methods. If all critical parameters have been established for achieving a particular starch composition, then the reaction may be allowed to proceed to a predetermined relative end point in time (i.e., 8 hours in Example I). The end point also may be monitored and defined by measuring the concentration of reducing sugars. The maltose which is produced by 1,4-alpha-D-glucosidase activity is a reducing sugar which is easily measured by methods well known in the art. Other techniques such as monitoring the change in viscosity or the change in molecular weight may be used to define the reaction end point.

In a preferred embodiment, the degradation end point is measured by determining the percent reducing sugars contained in the reaction medium. Each maltose unit contains two glucose units but only one reducing group that can be detected in a reducing sugar assay. Therefore, the percentage, by weight, of reducing sugars (calculated as glucose) is approximately equal to one-half of the percentage, by weight, of maltose units formed by degradation of the starch molecule. If the beta-amylase is contaminated with high levels of alpha-amylase, then the reaction medium may contain even higher levels of reducing groups, and reducing sugar measurements must be standardized to take into account the effect of such contamination on the measurement of the progress of the enzyme reaction. In the alternative, the maltose may be measured directly by other types of analyses known in the art.

The degree of starch degradation that is required to substantially improve the low temperature stability of the starch composition is subject to variation. It depends on the type of starch utilized, the presence and nature of any substituent groups and the degree, if any, of conversion. Starch degradation ranging from 13-55%, by weight, is known to yield improved low temperature stability in thickeners. (See U.S. Pat. No. 3,525,672.) For low viscosity emulsification applications (i.e., starches converted to a WF of 40-60), degradation progresses until up to 70%, by weight, of the starch, as measured by reducing sugar content of the starch dispersion, has been hydrolyzed to maltose. Particularly suitable are those starches in which the degradation has progressed until about 5-70%, more particularly from about 13-55%, by weight, of the starch, as measured by reducing sugar content of the starch dispersion which has been hydrolyzed to maltose.

The maximum amount of enzymatic degradation to maltose which can be theoretically achieved employing pure beta-amylase and unconverted starch is about 55%, by weight, of the starch. Pure beta-amylase is not readily available on a commercial basis. The beta-amylase which is commercially available contains small amounts of alpha-amylase, an endo-enzyme which cleaves internal starch branches at random, freeing these branches for beta-amylase activity. Starch conversion by acid, heat or oxidation, has a similar, but less pronounced effect on beta-amylase degradation of starch. Thus, degradation of up to 70%, by weight, of the starch may be achieved employing commercially available beta-amylase which is contaminated with small amounts of alpha-amylase.

After the desired degree of starch degradation has been reached, the enzyme may be deactivated. Beta-amylase is rapidly deactivated at temperatures of about 100° C therefore, the reaction may be conveniently terminated by increasing the temperature of the starch dispersion to at least 75° C for at least 15 minutes. The particularly preferred embodiment raises the temperature of the starch dispersion to about 55° C and lowers the pH to about 5.5.

After deactivation of the enzyme, the degraded starch solution is filtered through a filter aid. Filter aids are granular or fibrous solids capable of forming a highly permeable filter cake in which very fine solids or slimy, deformable flocs may be trapped. The two most common commercial filter aids are diatomaceous silica (also called diatomite or diatomaceous earth) and cellulosic fibers. Diatomaceous silica is almost pure silica prepared from deposits of diatom skeletons and expanded perlite which are particles of "puffed" lava composed principally of aluminum alkali silicate. Cellulosic fibers, carbon and gypsum may also be used as filter aids. Diatomaceous silica is the preferred filter aid. Particularly preferred diatomaceous silicas have a particle diameter of from about two to about six microns and include, for example, Celite® (commercially available from Mancel-Filterpure, Whitehouse NJ) and Radiolite 800 (commercially available from Showa Chemical, Tokyo, Japan).

The preferred filtration process is carried out on an aqueous solution of the degraded starch having a solids content of from about 18% to a 30%. Particularly preferred is a degraded starch having a solids content of between 22-23%. The diatomaceous silica is packed into columns of a multistage filter press. The solution of degraded starch is then pumped through the stages of the filter press under positive pressure.

Positive pressure may be provided by a variety of means, including but not limited to a gear pump. Pressure applied to the system may result in a flow rate exceeding 1000 liters/hour/meter² and may vary over the time of the filtration down to below 300 liters/hour/meter².

The resulting filtrate containing the degraded starch may be spray-dried, drum-dried or otherwise recovered in a form suitable for the intended application. Spray-drying is the preferred method and may be performed on a filtrate solution having a viscosity of between 20 and 30 cps and a solids content of from about 15 to 30% at 30°C.

This method of filtration results in a starch which, when measured according to the method of Example IIII, infra, has a turbidity of less than about 80, particularly less than about 50 and most particularly less than about 30 Nephelometer Turbidity Units ("NTUs").

The practitioner will recognize that the sequence of steps in the process of this invention may be carried out in any order, and are not limited to the preferred embodiment set forth above. Thus, in a second preferred embodiment, the sequence is reversed so that the enzymatic degradation step is completed prior to the chemical derivatization step described above.

If the end-use application requires further purification of the starch composition, the maltose and other reaction impurities and by-products may be removed by dialysis, filtration, centrifugation or any other method known in the art for isolating and concentrating starch compositions.

For low viscosity emulsifiers, the reduction in viscosity during enzyme reaction may be used for determining when the desired level of degradation has been reached. A method for monitoring the viscosity of the reaction solution is described herein in Example I. Any of the many methods known in the art for measuring viscosity may be used. However, viscosity may be altered by factors other than the desired enzyme activity. For example, if the beta-amylase contains large amounts of alpha-amylase, then reduction in viscosity cannot be directly correlated to beta-amylase activity. Therefore, the level of alpha-amylase contamination must be carefully monitored and controlled if viscosity changes are used to determine the level of enzyme degradation. If the beta-amylase, or any other 1,4-alpha-D-glucosidase used herein, contains high levels of alpha-amylase contaminant, then the beta-amylase may be purified prior to use, or an alpha-amylase inhibitor may be added to the reaction dispersion.

In beverage flavor emulsion applications, modified waxy maize starches converted to a Water Fluidity of about 40-60 are preferred. Beverages containing the starch of the present invention and flavoring oils, especially orange oil, will exhibit sedimentation levels of less than about 2, particularly less than about 1 and substantially equal to about 0 after storing for six months, when measured according to the method of Example V, *infra*.

The following examples will more fully illustrate the embodiments of this invention. In these examples, all parts and percentages are given by dry weight basis and all temperatures are in degrees Celsius unless otherwise noted. Shelf stability is measured at low temperature to accelerate retrogradation and shorten the testing period.

### EXAMPLE I

This example illustrates the preparation of a modified starch of the invention for use in beverage flavor emulsification.

An octenylsuccinate derivative (OSA) of the waxy maize starch was then prepared by the method disclosed in Example II of U.S. Pat. No. 2,661,349 except that the corn starch was replaced by waxy maize starch and the waxy maize starch was reacted with 3% octenylsuccinic acid anhydride, rather than with 0.5% as disclosed in the reference. A 28% aqueous slurry of the OSA waxy maize was jet cooked at approximately 300° F (149° C). Thereafter, the cooked OSA waxy maize was placed in a constant temperature bath and maintained at 85-88°C with constant stirring. The pH was adjusted to 5.8-6.0 with 3% hydrochloric acid or sodium hydroxide as needed.

The OSA waxy maize was then hydrolyzed with alpha amylase. After 15 minutes, the temperature of the solution was raised to 95°C and the pH lowered to 4.5

The cooked OSA waxy maize dispersion was divided into four batches and a different level of barley beta-amylase (1,4-alpha-D-glucan maltohydrolase (E.C. 3.2.1.2), obtained from Fermco Biochemics, Inc., Elk Grove Village, III.) was added to each batch. The amounts of enzyme added were 168, 334, 840 and 1,110 DP° per 100 g dry basis of OSA waxy maize. It had been determined in previous experiments that this relative range of enzyme concentration would produce the desired starch degradation in approximately eight hours. The three batches which contained at least 334 DP degrees per 100 g of starch reached the desired degree of degradation in 3-8 hours.

The degree of degradation was determined by monitoring the funnel viscosity of the dispersion. Accordingly, the level of alpha-amylase contamination present in the barley beta-amylase was monitored and limited to no more than 0.4 DU/ml of enzyme solution so that the viscosity would not be affected by this variable. A DU (Dextrinizing Unit) is the quantity of alpha-amylase that will dextrinize soluble starch, in the presence of an excess of beta-amylase, at the rate of 1 gm/hour at 20° C.

The beta-amylase conversion is carried out at a temperature of about 60°C and a pH of about 5 for about 3.5 hours. The temperature was then raised to about 90°C to inactivate the enzyme.

To measure funnel viscosity, 38 g of the converted starch (anhydrous basis) was weighed into a tared 250 ml beaker (stainless steel) containing a thermometer and brought to 200 g total weight with distilled water. The sample was mixed to dissolve any lumps and heated or cooled to 72° F. (22° C). A total of 100 ml of the cooked starch dispersion was measured into a graduated cylinder. It was then poured into a calibrated funnel while using a finger to close the orifice. A small amount was allowed to flow into the graduate to remove any trapped air, and the complete balance remaining in the graduate was poured back into the funnel. Using a timer, the time required for the 100 ml sample to flow through the apex of the funnel was recorded.

The funnel was a standard 58° thick-wall, resistance glass funnel whose top diameter was about 9-10 cm with the inside diameter of the stem being about 0.381 cm. The funnel was calibrated so as to allow 100 ml of water to go through in 6 seconds using the above procedure.

By carefully controlling the parameters of the funnel viscosity test and limiting alpha-amylase contamination, the degree of starch degradation by beta-amylase was correlated to the loss in viscosity. The reducing sugars were measured by the Fehling method to confirm the degree of degradation.

In this example, the desired enzyme reaction end point was reached within a funnel viscosity range from 9-50 seconds. The reducing sugars content of these samples ranged from up to 35%, particularly 5-35%, more particularly 20-35%, most particularly from 29-35%. The corresponding degradation of the starch, by weight, ranged from 58-70%. When the targeted viscosity was reached, the enzyme was deactivated by injection of live steam into the reaction solution until a temperature of at least 75 °C was attained and held for at least 15 min.

Each batch was then filtered through diatomaceous silica to afford a 26% solution of the degraded starch. See example II, below.

The batches were then spray-dried at 20 Brix wherein the spray drier had an inlet temperature of 160 °C and an outlet temperature of 95-100 ° C using a standard #22 11/4 J nozzle obtained from Spraying Systems Company. The spray-dried starch product was screened through #40 mesh screen.

### EXAMPLE II

This example illustrates the filtration process of the present invention.

A solution of the degraded starch obtained in Example I was filtered through a diatomaceous silica filter aid. The particular filter aid used was commercially available Radiolite 800 (Showa Chemical, Tokyo, Japan). Three liters of Radiolite 800 having a 2-6 micron particle size distribution was suspended in 3 liters of water at 80° C.

The suspension was then pumped into the filter press via a gear pump at an initial rate of 1000 liters/hour/ m², and washed with water until the effluent is clear. The filter press of this example was equipped with five compartments supplemented with filter paper (to assist the deposit of the filter aid), accounting for a total filter surface area of 0.25 meter².

A solution of the degraded waxy maize starch produced according to Example I was then pumped into the filter press with the gear pump. The initial flow rate was 1000 liters/hour/ m² generating a pressure of 0.5 kg/cm²/G which dropped over 20 minutes to 300 liters/hour/ m² due to an increased internal pressure of 1.5 kg/cm²/G.

The collected filtrate comprised a solution of the degraded starch having a 26% solution of the enzyme converted material with a viscosity of 28 cps.

The filtrate was then spray dried according to the method described in Example I.

### EXAMPLE III

This example illustrates the procedure for measuring the turbidity of samples of the degraded starches of the present invention, as well as the unfiltered degraded starches which were used for comparison purposes in Example IV, below.

The starch produced according to Example I (6.0 gm) was dissolved in distilled water (194 ml). After allowing the air bubbles of the solution to dissipate, the turbidity of the solution was measured with a HACK 2100 Turbidimeter. Turbidity values are all reported in Nephelometer Turbidity Units or NTU. The filtered starch prepared according to Example I had a turbidity of 23 NTU.

### EXAMPLE IV

This example illustrates the desirable reduction in sedimentation that occurs when using an emulsifier prepared from a filtered degraded starch that has been prepared according to Example I. For comparison, a control beverage was also prepared with a degraded starch prepared substantially according to Example I, but the starch was not filtered before spray drying. The beverage preparation and sedimentation evaluation tests are described below.

### Beverage Preparation

First, a flavor emulsion was prepared according to the following procedure. Sodium benzoate (0.15%) and citric acid (0.35%) were dissolved in water (75.5%) to form a solution. The starch (12%) prepared according to Example I was suspended in the agitated solution and a flavor oil blend (12%) was added. The resultant mixture was homogenized at 3500 psi to provide a flavor emulsion with an average particle size of below one micron. Each percentage unit (%) used in this example indicates percent by weight of the total flavor emulsion. The flavor oil blend was composed of 60% orange oil, to 40% Ester Gum.

The beverage was prepared by adding 1.26 gm of the flavor emulsion to an agitated solution of 11% sugar, 0.3% citric acid and 0.1% sodium benzoate in one liter of water. Two twelve-ounce bottles were filled with the beverage and sealed.

### Sedimentation Evaluation Test

After sitting at six months at room temperature, the level of sediment formation was evaluated on a scale of 0 to 4. A rating of 0 indicates no sediment deposited in the bottle, a value of 1 indicates light sediment, 2 indicates moderate sediment, 3 indicates heavy sediment and a value of 4 indicates excessive sediment.

Two replicate sample beverages were prepared from the non-filtered control starch samples and the filtered starch samples prepared according to Example I. After sitting for six months, the average sediment value for the filtered sample beverages was 0, indicating no sedimentation had taken place. In comparison, the non-filtered control sample beverages exhibited an average sediment value of 2 indicating a moderate level of sediment.

Thus, filtering the degraded starch before spray-drying has a beneficial effect upon the long term sedimentation levels of a beverage prepared with such a starch based emulsifier.

### EXAMPLE V

This example illustrates the use of the turbidity of aqueous solutions of starch to predict desirable levels of sedimentation in beverages prepared with the starch emusifiers of the present invention.

The turbidity of each of the above starches, both the filtered starch sample prepared according to the procedure of Example I, the filtered starch sample which was bleached with 0.75% chlorine, and the unfiltered control starch sample were measured according to the procedure of Example III. The drop in turbidity of the starch solutions when filtered corresponds to a desirable reduction in the sedimentation of the prepared beverages as measured in Example IV. The turbidity and sedimentation values are exhibited in Table 1, below.

**TABLE 1**

| **STARCH** | **Turbidity (NTU)** | **Beverage Sediment (after 6 months)** |
|---|---|---|
| Filtered Starch Sample | 23 | 0 |
| Filtered Starch Sample, Treated w/0.75% chlorine | 24.8 | 0 |
| Unfiltered Control Starch Sample | 80 | 2 |

As can be seen from Table 1, above, the lower turbidity of the aqueous solution of the filtered starch sample correlates with a substantially sediment-free beverage which is prepared from the filtered starch sample. In contrast, the higher turbidity of the non-filtered control starch sample correlates with an undesirable moderate level of sedimentation. Thus, the turbidity of an aqueous starch sample can be used to predict the level of sedimentation in beverages prepared from the starches.

Now that the preferred embodiments of the present invention have been described in detail, various modifications and improvements thereon will become readily apparent to those skilled in the art. Accordingly, the scope and spirit of the invention are to be limited only by the claims and not by the foregoing specification.

## Claims

1. A process for obtaining an emulsifier useful in food products comprising the steps of:
a. derivatizing a base starch to give a starch derivative;
b. degrading the starch derivative by reaction with an exo-enzyme capable of cleaving 1,4-alpha-D-glucosidic linkages from non-reducing ends of starch, but incapable of cleaving 1,6-alpha-D-glucosidic linkages of starch; and
c. filtering the substantially degraded starch through a filter aid so that a filtered aqueous solution of the corresponding spray-dried degraded starch (6 gm in 194 ml water) has a turbidity of less than about 80 Nephelometer Turbidity Units ("NTUs").

2. The process of Claim 1 wherein the starch derivative is derivatized by hydrophobic groups.

3. The process of Claims 1-2 wherein steps a and b are interchanged.

4. The process of Claims 1-3 further comprising converting the base starch.

5. The process of Claims 1-4 further comprising bleaching the base starch.

6. The process of Claims 1-4 further comprising bleaching the derivatized starch.

7. The process of Claims 1-6 further comprising gelatinizing the derivatized starch.

8. The process of claims 1-7 wherein the filter aid is diatomaceous silica.

9. The process of claims 1-8 wherein the filtering process occurs in a multistage filter press under positive pressure.

10. The process of claims 1-9 wherein the turbidity of the filtered aqueous solution of the degraded starch is less than about 50 NTUs.

11. The process of claims 1-10 wherein the turbidity of the aqueous solution of the degraded starch is less than about 30 NTUs.

12. The emulsifier prepared according to Claims 1-11.

13. The food product comprising the emulsifier of Claim 12.

14. The food product of claims 12-13 further comprising flavoring oil(s), sweetener(s) and water.

15. The food product of Claims 12-14, wherein the food product is a beverage having a sedimentation level of less than about 2.

16. The food product of Claims 12-15 wherein the beverage has a sedimentation level of less than about 1.

17. The food product of claims 12-16 wherein the beverage has a sedimentation level of substantially 0.

18. A flavoring agent, comprising an emulsion having improved stability and resistance to oiling and gelling during storage, wherein the emulsion is prepared employing a starch derivative containing a hydrophobic group or both a hydrophilic group and a hydrophic group, of which up to about 70%, by weight, has been degraded to maltose by reaction with an exo-enzyme capable of cleaving 1,4-alpha-D-glucosidic linkages from non-reducing ends of starch but incapable of cleaving 1,6-alpha-D-glucosidic linkages of starch having a sedimentation rating of less than about 2.

19. The flavoring agent of claim 18 wherein the exo-enzyme is beta-amylase, and the sedimentation level is less than about 1.

20. The flavoring agent of claims 18-19 wherein the sedimentation level is substantially 0.
